Europäisches Patentamt

(19) European Patent Office

Office européen des brevets

(11) Publication number: **0 023 783**
**A1**

(12) **EUROPEAN PATENT APPLICATION**

(21) Application number: **80302405.8**

(22) Date of filing: **17.07.80**

(51) Int. Cl.³: **G 11 B 5/09**

(30) Priority: **19.07.79 US 58804**

(43) Date of publication of application: **11.02.81**
**Bulletin 81/6**

(84) Designated Contracting States: **BE CH DE FR GB IT LI**

(71) Applicant: **Exxon Research and Engineering Company,
P.O.Box 390 200 Park Avenue, Florham Park New
Jersey 07932 (US)**

(72) Inventor: **Yeager, Larry James, 513 Municipal Drive,
Thorndale Pennsylvania (US)**

(74) Representative: **Pitkin, Robert Wilfred et al, 5 Hanover
Square, London W1R 9HE (GB)**

(54) **Data recovery circuit.**

(57) A data recovery circuit is described which is suitable
for use in decoding high density encoded data used in a
selfclocking system, more especially where there is not a
regular clock signal. The recovery circuit comprises a phase
locked loop (PLL) circuit having a sample and hold phase
detector (30) in combination with a voltage controlled
oscillator (32) producing a ramp output. The sample and
hold phase detector (30) enables the phase locked loop
to track the phase of the data ("READ DATA") and to
maintain a synchronized phase during bit cells when no
clock pulse is present. The circuit provides for generation
of a data window ("RD CLOCK") which is held in phased
alignment with respect to the encoded data.

This invention lies in the field of data recovery circuits for systems utilizing a self-clocking encoding scheme, and in particular a data recovery circuit utilizing a phase locked loop with a sample and hold phase detector.

The subject invention is designed for efficient data separation of a data signal which is part of an encoding scheme providing for self-clocked recovery, and is useful for recovering data from a variety of storage media and particularly from a floppy disc. The prior art, as seen in U.S. Patent 4,141,146, assigned to the same assignee, illustrates means for separating "single density encoded" data, or FM, wherein a single data bit is encoded between successive clock pulses. This data scheme has in the past been a prevalent scheme for encoding data on floppy discs. However, there is a demand and need for higher density encoding arrangements, such as MFM and $M^2FM$ and like encoding schemes. These higher density encoding schemes permit a greater density of actual data bits to be encoded between clock pulses, but at the tradeoff of requiring a specialized recovery circuit for recovery of clock pulses, since the clock pulses are not regularly occurring.

The MFM and other higher density encoding schemes do not provide a clock pulse in every bit cell as does FM, thus making it difficult to employ a data recovery circuit with a PLL using an edge sensitive phase comparator or other simple logic arrangements adaptable where clock pulses are regularly present.

One prior art arrangement for data recovery in a self-clocking system utilizes a synchronous counter circuit. The synchronous counter is a pre-set counter which is clocked by a free running high frequency clock, and is cleared or pre-set by a data bit or a clock, with an output from the counter being taken as the clock timing signal. The problem with this arrangement is that the counter is essentially free running and there is no real tracking of the clocks that are encoded with the data. Other forms of self-clocking data recovery systems are found in the art, and involve complicated non-tracking logic circuitry involving circuits introducing predetermined time delays so as to internally generate clock pulses in the absence of detected clock pulses.

When in this specification, for example in the embodiments described with reference to the accompanying drawings, the encoding scheme utilized is MFM (modified frequency modulation), then this means a self-clocking encoding scheme with the following rules:

1. A "1" is defined as a pulse (or flux transition) occurring at the center of a bit cell.

2. A "0" is defined as a pulse (or flux transition) occurring at the beginning of a bit cell, except when preceded by a "1". In other words, when a 0 follows a 0, there is a flux transition at the beginning of the bit cell of the following 0. However, when a 0 follows a 1, there is no flux transition anywhere for the bit cell of the following 0. The use of MFM encoding permits stored data densities of up to twice that of data encoded using the conventional FM technique.

However another, higher density, encoding scheme with which the circuit of this invention may be utilized, is $M^2FM$. In $M^2FM$, a "1" is recorded as a pulse or flux transition at the center of its bit cell, and clock bits are placed at the leading edge of a bit cell only if the previous bit cell contains neither a "1" transition nor a clock transition. Stated differently, in $M^2FM$, data bits are recorded at the center of a bit cell and clock bits at the leading edge of a bit cell; the block bits are recorded only if the previous bit cell contains neither a "1" nor a clock bit and if the present bit cell also does not contain a "1".

In addition to MFM and $M^2FM$, the phase locked loop circuit of this invention is adaptable for use with other higher density encoding schemes, as long as there is a limit on the consecutive number of bit cells that do not contain a clock signal.

It is an object and advantage of this invention to provide a data ——————— recovery circuit utilizing a unique phase locked loop with a sample and hold phase detector, so as to generate clock signals which track the received encoded data and thereby provide means for recovering and separating in an accurate manner the clock signal and the data which was recorded on the storage medium in use.

It is another object and advantage of this invention to provide a circuit for recovering data from a higher density encoded signal, comprising a recovery circuit incorporating a phase locked loop circuit which automatically and accurately tracks the encoded signals to maintain proper clocked recovery when variations occur in the rate of the encoded signal.

It is another object and advantage of this invention to provide a data recovery circuit for use in conjunction with a floppy disc type storage device having data encoded thereon in an encoding scheme which requires self-clocking, the recovery circuit being designed to receive signals from the storage device and to separate the encoded data from clock pulses, the circuit providing means for tracking received clock pulses so as to provide the desired self-clocking feature in a manner which is relatively insensitive to variations in the rate of the signal caused by system variations such as changes in the speed of the floppy disc drive.

It is a further advantage of this invention to provide a data recovery circuit for providing efficient clock recovery from MFM, $M^2FM$ or other high density encoded data, which recovery circuit is simple, reliable, and is adaptive to remain time synchronized with the aperiodic clock pulses found in the detected signal.

In accordance with the above objects, there is provided a data recovery circuit for separating data from an encoded high density signal, which signal contains data along with clock signals which are spaced in a predetermined but irregular manner, comprising a circuit for tracking or following the timing of the irregularly occurring clock pulses, so as to provide self-clocking for recovery of the encoded data. Specifically, the circuit utilizes a phase locked loop (PLL) for locking onto the high density encoded data and clock signals and generating therefrom a tracked clock signal for purposes of data recovery. The PLL contains a sample and hold phase detector which acts to adjust the PLL timing so that it accurately tracks clock signals whenever they appear and which holds or remembers the clock timing so as to enable accurate generation of clock signals during bit cells when no clock signal is detected.

BRIEF DESCRIPTION OF THE DRAWINGS

Figure 1 is a circuit diagram of the data recovery circuit of this invention.

Figure 2 comprises a plurality of waveform diagrams illustrating signal levels and waveforms at specified points of the circuit of Figure 1.

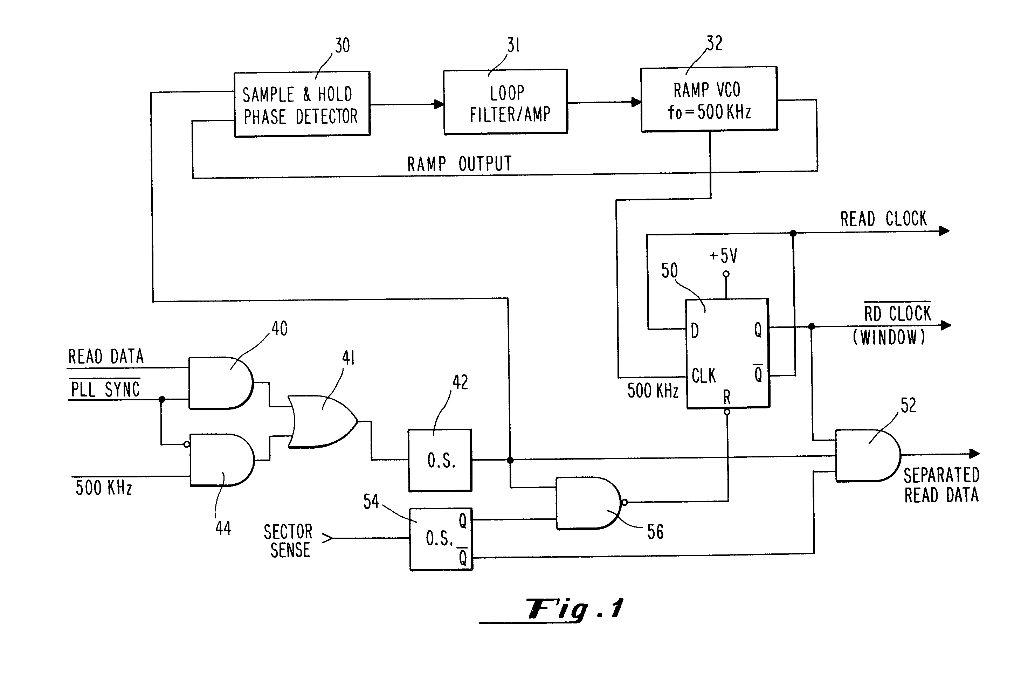

Referring now to Figure 1, there is shown a circuit diagram of the data recovery circuit of this invention. The data, including both data bits and clock bits (generally in the form of pulses or transitions from one state to another) are received on the READ DATA Line which is inputted to a first input of AND gate 40.

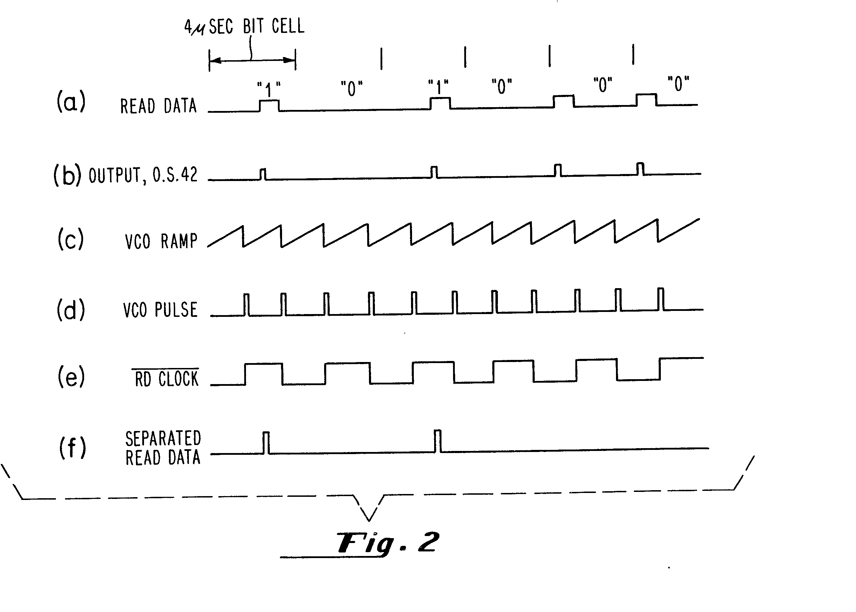

The other input to AND gate 40 is designated $\overline{PLL}$ $\overline{SYNC}$. This signal, which is software generated, is high when the floppy disc head is settled in reading position on the disc, and thereby gates in the data when conditions are ready for reading. The output of gate 40 is passed through OR gate 41 to a one-shot circuit 42. One-shot circuit 42 produces an output of 125 nanoseconds duration, which is connected as a sample pulse to a first input to sample and hold phase detector 30. The output of one-shot 42, seen as waveform (b) in Figure 2, is also connected as an input to gate 52, and is gated through as separated read data only when the outer inputs to gate 52 are high, as indicated below.

The PLL of this invention comprises elements 30, 31 and 32. The sample and hold phase detector 30 is suitably provided by an integrated circuit such as type CD 4016. The narrow sample signal from one-shot 42 samples the ramping signal (waveform (c) in Figure 2) from ramp VCO 32, and produces an output corresponding to the ramp level at the time of the narrow sample pulse. The sampled signal is held by a capacitor in the sample and hold circuit, which output is maintained in the absence of sample signals. The output of circuit 30 is filtered and amplified at circuit 31 to provide an error control voltage signal which is inputted to the ramp VCO 32. When the PLL is locked, the ramp signal is being sampled at its midpoint, and thus when the signal frequency shifts the sampling point shifts, resulting in a higher or lower voltage at the output of sample and hold circuit 30, causing the VCO to move in a correcting or tracking direction. The sample and hold circuit and the filter in circuit 31 hold the VCO on a correct frequency between samples. VCO circuit 32 also provides a pulse output, as illustrated in waveform (d) Figure 2, which pulse output is connected to the clock terminal of D type flip-flop 50. The Q output of circuit 50 is the $\overline{RD}$ $\overline{CLOCK}$ (WINDOW) signal, which is also inputted as an input of gate 52. The $\overline{Q}$ output is connected to the D input, and is also outputted as the READ CLOCK signal.

A free running 500 KHz signal is inputted as a first input to AND gate 44, and the $\overline{PLL\ SYNC}$ signal is inverted and inputted as a second signal to gate 44. Thus, whenever the floppy disc is not ready to be read, the 500 KHz signal is gated through gate 44 and OR gate 41, so that sample pulses at a steady 500 KHz rate are inputted to the sample and hold detector 30. This maintains the PLL locked at 500 KHz while data is not being read. When data is to be read, the $\overline{PLL\ SYNC}$ line is brought high, this switching between the 500 KHz signal and the data resulting in faster PLL response, as the PLL does not go into saturation.

For use with a floppy disc, a sector sense signal is inputted to one-shot 54. A typical floppy disc may have 16 sectors per track, with 35 tracks per disc. The sector sense signal causes circuit 54 to produce an output of about 700 microseconds duration. This causes the $\overline{Q}$ output of circuit 54 to block or disable data from being passed through gate 52. At the same time, the signals from one-shot 42 are gated through gate 56 to clear the flip-flop 50. For the configuration shown, during this time the read data signal is a string of zeros. The Q terminal of one-shot 54 goes high, enabling output pulses from one-shot 42 to be gated through 56 to reset flip-flop 50. Thus, the timing of one-shot 54 is such that the PLL has sufficient time to lock onto the read data and flip-flop 50 is initialized before the enabling of the separated read data at gate 52.

For an understanding of the operation of the circuit, reference is made to the waveforms of Figure 2 as well as the circuit of Figure 1. For a data rate of 250 K bits per second, the bit cells are of a duration of 4 microseconds, as seen in waveform (a). As they are illustrated, for MFM, a 1 is represented by a pulse beginning at the center of the bit cell, while a 0 is represented by a pulse beginning at the beginning of the bit cell except when the 0 follows a 1. Each pulse on the read data line causes one-shot 42 to produce an output sample pulse. The PLL has a $f_O$ of 500 KHz, and produces the ramp output as seen in waveform (c) and the pulse output as seen in waveform (d). As illustrated in Figure 2, when the PLL is locked, the sample pulses appear at approximately the center of the VCO ramp signal. The narrow sample pulse samples the ramping signal, producing the control signal which is passed through filter/amplifier 31 to control the phase of the ramp signal, thereby locking the VCO to the phase of the read data. The 500 KHz VCO pulse signal is connected to the clock input of flip-flop 50. Since the $\overline{Q}$ output is connected to the D input, flip-flop 50 acts as a divide-by-two circuit. Each VCO pulse switches the flip-flop 50, such that the $\overline{\text{RD CLOCK}}$ signal, as seen in waveform (e), switches corresponding to each VCO pulse. This signal is initialized, as previously discussed, by the signal connected to the reset terminal of flip-flop 50, so that the window signal is at a high level corresponding to the middle of each cell and at a low level straddling the boundary of each bit cell. The window signal is gated to an input of AND gate 52, such that only the pulses from one-shot 42 which represent "1" signals are gated through as separated read data. Not shown is further circuitry including a D type flip-flop and a serial-to-parallel shift register which receive the separated read data signal, the window and not window signals, and reconstitute the desired data in the form in which it was initially found before being recorded on the floppy disc. The separated read data is inputted to the set terminal of the D type flip-flop (not shown), while the window signal ($\overline{\text{RD CLOCK}}$) is inputted to the clock terminal and the D terminal is grounded. The Q output of the D type flip-flop is connected to the input of the serial to parallel shift register and the read clock signal is inputted to the clock input thereof.

There is thus demonstrated an efficient and reliable circuit for recovery of the clock signal in a self-clocking system for separating out high density encoded data. The use of the sample and hold phase detector in the PLL permits recovery of the clock signal where prior art arrangements such as edge sensitive phase comparators cannot be used due to the irregularity of the clock signal. Thus, the circuit shown enables self-clocking for encoding schemes where there is not a regular clock signal, as long as there is a limit on the number of consecutive bit cells which do not contain a clock signal. The sample and hold circuit will drift after a predetermined number of sample absences, but this is a hardware limited function. For the commercial integrated circuit referred to above, the sample and hold circuit will handle the MFM and $M^2FM$ self-clocking codes without any difficulty.

WHAT WE CLAIM IS:

1. A circuit for recovering data from a high density encoded signal consisting of a data signal and an irregularly occurring clock signal, the encoded signal having a predetermined bit cell frequency and having a respective clock transition position and data transition position for each bit cell, which circuit is characterized by:

a sample generator for generating a sample signal corresponding to each received signal transition in either said clock transition position or said data transition position;

a phase locked loop circuit, having a voltage controlled ramp oscillator adapted to operate at about double said cell frequency and having a sample and hold phase detector having two inputs, one input connected to the output of the sample generator and the other to the ramp output of said ramp oscillator, so that the output of said sample and hold phase detector is a control signal corresponding to the ramp output at the time of said sample;

means connected to said ramp oscillator for generating a data window signal at half the frequency of said ramp oscillator and in phase with the data transition position of each said bit cell; and

means for separating said data signal from said clock signal.

2. A circuit as claimed in claim 1, characterized in that said data window generating means comprises a D type flip-flop connected to act as a divide-by-two circuit.

3. A circuit as claimed in claim 1 or claim 2 characterized by initiating means for initiating the phase of said data window generating means.

4. A circuit as claimed in any preceding claim, characterized in that said encoded signal is MFM encoded.

5. A circuit as claimed in any one of claims 1 to 3, characterized in that said encoded signal is $M^2FM$ encoded.

6. A circuit for use in recovering a clock signal from an encoded signal including both data and clock components, wherein said encoded signal is high density encoded and has irregularly positioned clock signals, characterized in that said circuit comprises: (i) a phase locked loop operating around a predetermined center frequency and receiving input signals of a time duration small with respect to the time period of said center frequency, said phase locked loop comprising a sample and hold phase detector which receives as one input said small time duration signals; (ii) a voltage controlled ramp oscillator operating about said center frequency and providing a ramp signal connected as a second input to said sample and hold phase detector; and (iii) means connected between said sample and hold phase detector and said ramp oscillator for providing a correction signal to said ramp oscillator to correct its phase as a function of the timing of said small duration input signals with respect to said ramp signal.

7. A circuit as claimed in claim 6, characterized by means for alternately gating either data from a storage medium or a signal at said center frequency, for generating said small duration input signals, so that said phase locked loop is continuously locked at about its center frequency.

8. A circuit as claimed in claim 7, in combination with a disc storage medium, wherein data read from said disc is inputted for generating said small duration signals when said disc is controlled to be read, and signals from a fixed frequency oscillator are gated for generation of said small duration signals when said disc is not controlled to be read.

_**Fig.1**_

0023783

4μ SEC BIT CELL

(a) READ DATA     "1"   "0"   "1"   "0"   "0"   "0"

(b) OUTPUT, O.S.42

(c) VCO RAMP

(d) VCO PULSE

(e) $\overline{RD\ CLOCK}$

(f) SEPARATED READ DATA

_Fig. 2_

European Patent Office

EUROPEAN SEARCH REPORT

0023783

Application number

EP 80 30 2405.8

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | US - A - 4 065 796 (HEWLETT-PACKARD CO.) <br> * abstract * <br> -- | | G 11 B 5/09 |
| A | US - A - 4 017 806 (SPERRY RAND CORP.) <br> * column 2, lines 17 to 28; <br> column 3, lines 1 to 30 *. <br> -- | | |
| A | US - A - 4 017 803 (SPERRY RAND CORP.) <br> * column 3, line 30 to column 4, <br> line 11 * <br> -- | | G 11 B 5/09 <br> H 04 L 25/49 |
| D,A | US - A - 4 141 046 (EXXON) <br> * abstract * <br> ---- | | |

TECHNICAL FIELDS SEARCHED (Int.Cl.³)

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 04-11-1980 | LEITHÄUSER |

EPO Form 1503.1 06.78